# EUROPEAN PATENT SPECIFICATION

(11) **EP 3 421 334 B1**
(45) Date of publication and mention of the grant of the patent: **09.09.2020**
(21) Application number: 17845748.7
(22) Date of filing: 24.03.2017
(51) Int. Cl.: B62D 25/08, B62D 25/20, B62D 29/00, B62D 29/04

(54) **STRUCTURE FOR REAR PART OF BODY OF VEHICLE**
STRUKTUR FÜR HECKTEIL EINER FAHRZEUGKAROSSERIE
STRUCTURE POUR PARTIE ARRIÈRE DE CARROSSERIE DE VÉHICULE

(30) Priority: 30.08.2016 JP 2016167727
(43) Date of publication of application: 02.01.2019
(73) Proprietor: Mazda Motor Corporation, Aki-gun Hiroshima 730-8670 (JP)
(72) Inventor: MASUDA, Akiyoshi, Aki-gun, Hiroshima 730-8670 (JP)
(74) Representative: Thoma, Michael
(86) International application number: PCT/JP2017/012124
(87) International publication number: WO 2018/042737

(56) References cited:
- EP-A1- 2 955 084
- DE-A1-102011 119 561
- DE-A1-102012 018 693
- FR-A1- 2 967 965
- JP-A- H06 286 652
- JP-A- H06 286 652
- JP-A- 2002 362 418
- JP-A- 2009 078 705
- JP-U- H02 136 777

## Description

### Technical Field

The present invention relates to a structure for the rear part of the body of a vehicle.

### Background Art

In a structure for the body of a vehicle, a suspension tower section includes: a tower upper wall section to which an upper end of a suspension is fastened and affixed; a tower bend section which is bent downward from an outer peripheral edge section of the tower upper wall section; and a tower outer peripheral section which extends downward from the tower bend section.

JP 2016-5939 A discloses a suspension tower section in which an upper end of a suspension is fastened and affixed at three points to a tower upper wall section. The tower upper wall section has a substantially circular shape in a plan view, and a tower bend section formed on the outer periphery of the tower upper wall section has an annular shape. Since the tower bend section is bent downward and has an annular shape in a plan view, the tower bend section has relatively higher rigidity.

A load in the vertical direction input from the suspension to the tower upper wall section is transmitted to a tower outer peripheral wall section through the tower bend section having high rigidity.

A suspension structure according to the preamble of claim 1 is known from document FR 2 967 965 A1 which shows a suspension structure including a tower section which has a tower upper wall section having a circular, arc-shaped outer peripheral edge section and a tower bend section being bent downward from said tower upper wall section. Further suspension structures are known from DE 10 2012 018 693 A, DE 10 2011 119 561 A1, EP 2 955 084 A1 and JP H06286652 A.

### Summary of Invention

### Technical Problem

Incidentally, in a structure for the rear part of the body of a vehicle, a suspension may be affixed to a suspension tower section at front and rear two points. In this case, a tower upper wall section may have, in a plan view, a fan-like shape having a circular arc-shaped outer peripheral edge section located inside in the vehicle width direction. In this case, a tower bend section has a circular arc shape. Since the tower bend section has a circular arc shape, the tower bend section has an end in the peripheral direction and a load transmission path is interrupted at the end in the peripheral direction. Therefore, when a load in the vertical direction is input from the suspension to the suspension tower section, concentration of stress is likely to occur.

Therefore, when the load is transmitted from the tower bend section to the tower outer peripheral wall section, concentration of stress occurs at the end in the peripheral direction of the tower bend portion, which results in loss of load transmission to the tower outer peripheral wall section.

The present invention has been made in view of the above problem, and an object of the present invention is to provide a structure for the rear part of the body of a vehicle capable of suppressing concentration of stress at an end in the peripheral direction of a tower bend section of a suspension tower section and efficiently transmitting a load to a tower outer peripheral wall section, in a case where the tower bend section has a circular arc shape in a plan view.

### Solution to Problem

In order to solve the above problem, the invention of the present application is characterized by being configured as defined by claim 1. Preferred embodiments are laid down in the dependent claims.

A first aspect of the invention of the present application is a structure for a rear part of a body of a vehicle including a suspension tower section to which a suspension is mounted. The suspension tower section includes: a tower upper wall section which is formed in a fan-like shape, in a plan view, having a circular arc-shaped outer peripheral edge section located inside in a vehicle width direction, and which has a suspension fastening section to which an upper end of the suspension is fastened and affixed; a tower bend section which is a portion of the outer peripheral edge section, the portion bending downward; a tower outer peripheral wall section which extends downward from the tower bend section; and a first tower vertical wall section which is raised along the suspension tower section and extends downward from an end in a peripheral direction of the tower bend section to the tower outer peripheral wall section.

In addition, according to a second aspect of the invention, in the structure for the rear part of the body of the vehicle according to the first aspect of the invention, the suspension tower section is provided in a suspension housing. The suspension housing includes: a fastening-section circumferential wall section which is raised so as to surround a circumference of the suspension fastening section from outside in the vehicle width direction and an inner end of which in the vehicle width direction is connected to the first tower vertical wall section; and a first connecting wall section which is raised on the suspension housing and connects the fastening-section circumferential wall section and a first vehicle body constituent member positioned above the fastening-section circumferential wall section.

In addition, according to a third aspect of the invention, in the structure for the rear part of the body of the vehicle according to the second aspect of the invention, the suspension tower section further includes a second tower vertical wall section which extends downward from the tower bend section to the tower outer peripheral wall section, at a location in a front-rear direction substantially identical to the location of the suspension fastening section, and the suspension fastening section is positioned, in a plan view, on an imaginary line passing through an inner end in the vehicle width direction of the first connecting wall section and an upper end of the second tower vertical wall section.

In addition, according to a fourth aspect of the invention, in the structure for the rear part of the body of the vehicle according to the first to third aspects of the invention, the suspension housing further includes a second connecting wall section which is raised on the suspension housing and connects the first tower vertical wall section and a second vehicle body constituent member positioned either forward or rearward of the first tower vertical wall section.

In a fifth aspect of the invention, in the structure for the rear part of the body of the vehicle according to any one of the first to fourth aspects of the invention, the suspension tower section is configured such that the suspension fastening section is thicker than rest of the suspension tower section.

### Advantageous Effects of Invention

With the above configuration, according to the respective aspects of the invention of the present application, the following effects can be obtained.

First, according to the first aspect of the invention, in a case where the tower upper wall section is formed in a fan-like shape in a plan view, and thus, the tower bend section has a circular arc shape in a plan view, a load in the vertical direction input from the suspension to the suspension fastening section is transmitted from the tower bend section to the tower outer peripheral wall section through the first tower vertical wall section. In this case, since the first tower vertical wall section extends from the end in the peripheral direction of the tower bend section, a load transmission path does not terminate at the end in the peripheral direction of the tower bend section, and concentration of stress at the end in the peripheral direction is suppressed.

Therefore, in the case where the tower upper wall section is formed in a fan-like shape in a plan view, a load in the vertical direction input to the suspension fastening section can be efficiently transmitted to the tower outer peripheral wall section. Therefore, rigidity in the vertical direction of the suspension tower section can be improved.

In addition, according to the second aspect of the invention, a load in the vertical direction input to the suspension fastening section is transmitted through the first connecting wall section to the first vehicle body constituent member positioned above the first connecting wall section. Therefore, a load in the vertical direction input to the suspension fastening section is dispersed in the vertical direction through the first tower vertical wall section and the first connecting wall section. Furthermore, since rigidity of the suspension fastening section is increased by the fastening-section circumferential wall section, the load can be more efficiently dispersed in the vertical direction.

In addition, according to the third aspect of the invention, a load in the vertical direction input to the suspension fastening section is transmitted to the tower outer peripheral wall section through the second tower vertical wall section in addition to the first tower vertical wall section. Furthermore, since the first connecting wall section and the second tower vertical wall section are positioned to face each other with the suspension fastening section interposed therebetween, the first connecting wall section and the second tower vertical wall section act so as to pull against each other, which makes it easy to resist a load in the vertical direction input to the suspension fastening section.

In addition, according to the fourth aspect of the invention, since deformation in the front-rear direction of the first tower vertical wall section is suppressed by the second connecting wall section, rigidity of the first tower vertical wall section is improved. Therefore, it is possible to make the first tower vertical wall section effectively act so as to resist in the vertical direction while suppressing deformation of first tower vertical wall section in the front-rear direction, against a load transmitted from the suspension fastening section.

In addition, according to the fifth aspect of the invention, rigidity of the suspension fastening section can be improved. Therefore, while suppressing deformation in the suspension fastening section, a load in the vertical direction input to the suspension fastening section can be efficiently transmitted to the rest.

That is, according to the structure for the rear part of the body of the vehicle of the present invention, it is possible to suppress concentration of stress at the end in the peripheral direction of the tower bend section and to efficiently transmit a load to the tower outer peripheral wall section.

### Brief Description of Drawings

Fig. 1 is a perspective view illustrating a structure for a rear part of a body of a vehicle according to an embodiment of the present invention.
Fig. 2 is a perspective view illustrating the periphery of a suspension housing.
Fig. 3 is an enlarged perspective view illustrating the periphery of a tower upper wall section.
Fig. 4 is a perspective view of the suspension housing as viewed from an inner surface side.
Fig. 5 is a cross-sectional view taken along line V-V in Fig. 2.

### Description of Embodiments

Hereinafter, an embodiment of the present invention will be described with reference to the attached drawings. In the following description, although one side (right side) in the vehicle width direction of a structure for a rear part of a body of an automobile will mainly be described, the other side (left side) is similar to the one side. In addition, front/rear, inside/outside, and top/bottom directions illustrated in the respective drawings are the directions of the front-rear direction, the width direction, and the vertical direction of the vehicle, respectively, unless otherwise specified.

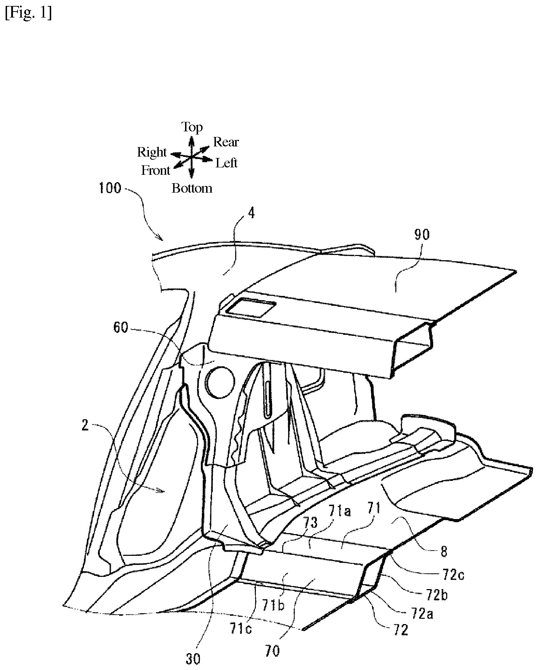

Fig. 1 is a perspective view of a structure 100 for the rear part of the body of a vehicle according to an embodiment of the present invention as viewed from the front, and illustrates a right-side portion of the vehicle. As illustrated in Fig. 1, the structure 100 for the rear part of the body of the vehicle includes: a wheel house inner 2 covering an upper part of a rear wheel (not illustrated) from the inside in the vehicle width direction; a rear floor panel 8 connected to a lower part of the wheel house inner 2 and extending inside in the vehicle width direction: a side panel 4 (first vehicle body constituent member) connected to an outer end in the vehicle width direction of the wheel house inner 2 and extending upward; and a package tray assembly 90 extending inside in the width direction above the wheel house inner 2.

On a front end section of the rear floor panel 8, a floor cross member 70 extending in the vehicle width direction is provided. The floor cross member 70 includes: a floor upper cross member 71 which has an upper wall section 71a and a front wall section 71b extending downward from the front end of the upper wall section 71a; and a floor lower cross member 72 which has a lower wall section 72a and a rear wall section 72b rising upward from the rear end of the lower wall section 72a.

A flange section 72c formed at the upper end of the rear wall section 72b of the floor lower cross member 72 is joined, from below, to the rear end section of the upper wall section 71a of the floor upper cross member 71. A flange section 71c formed at the lower end of the front wall section 71b of the floor upper cross member 71 is joined, from above, to the front end section of the lower wall section 72a of the floor lower cross member 72. As a result, the floor cross member 70 is formed to have a closed cross-section structure extending in the vehicle width direction.

Note that the floor cross member 70 may have any structure as long as the structure is a closed cross-section structure extending in the vehicle width direction. For example, a closed cross-section structure extending in the vehicle width direction may be formed by joining a member, having a hat-shaped cross section with the lower side opened and extending in the vehicle width direction, to the rear floor panel 8 from above. Alternatively, various other structures may be adopted.

A brace section 30 (second vehicle body constituent member) extending upward is connected to an outer end in the vehicle width direction of the floor cross member 70. A package gusset 60 extending upward is connected to an upper part of the brace section 30. An upper part of the package gusset 60 is connected to the package tray assembly 90. That is, the brace section 30 and the package tray assembly 90 are vertically connected by the package gusset 60.

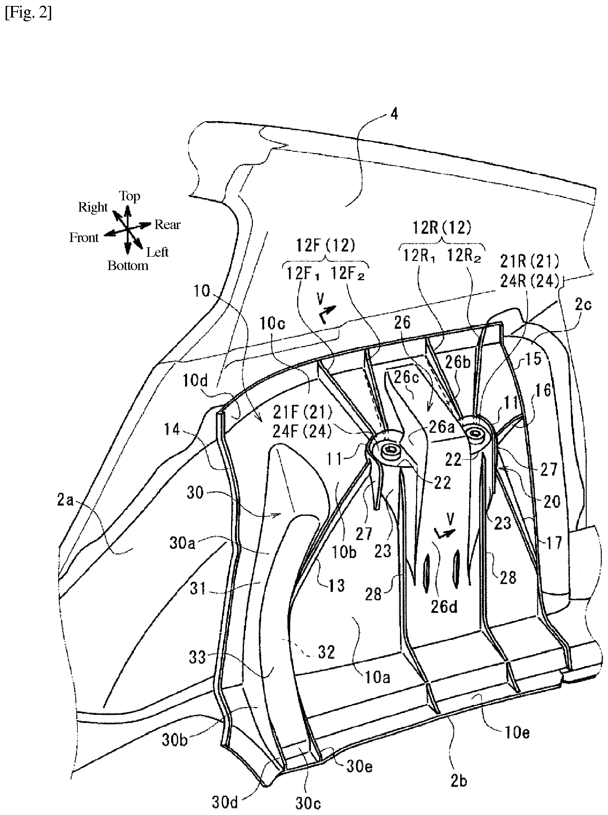

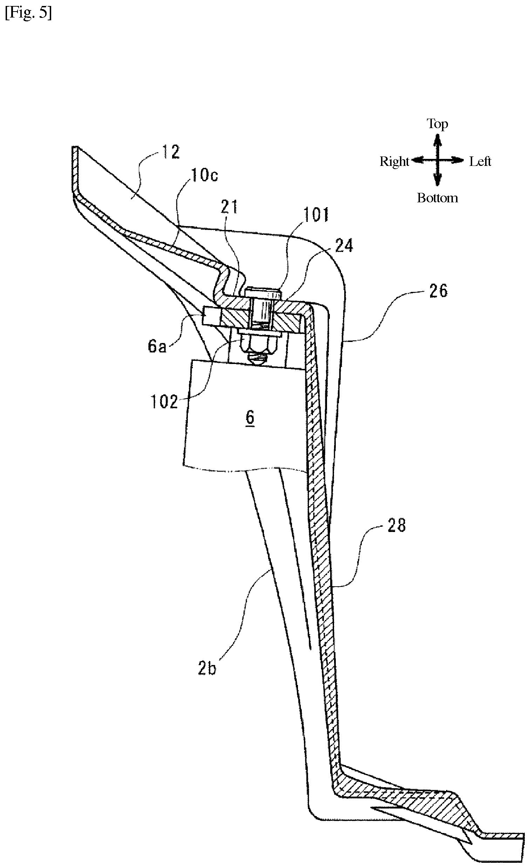

Fig. 2 is a perspective view illustrating the periphery of the wheel house inner 2. The floor cross member 70, the package gusset 60, and the package tray assembly 90 are omitted in Fig. 2. As illustrated in Fig. 2, the wheel house inner 2 is formed by connecting three members divided in the front-rear direction, that is, a wheel house inner front part 2a positioned on the front side, a suspension housing 2b positioned at a substantially center in the front-rear direction and to which a suspension 6 (see Fig. 5) is mounted, and a wheel house inner rear part 2c positioned on the rear side.

A front end section of the suspension housing 2b is connected to a rear end of the wheel house inner front part 2a from inside in the vehicle width direction. A rear end section of the suspension housing 2b is joined to a front end section of the wheel house inner rear part 2c from inside in the vehicle width direction.

The suspension housing 2b has a housing main body 10 constituting an outer shell, a suspension tower section 20 positioned at an inner portion in the vehicle width direction of the housing main body 10, and the brace section 30 positioned forward of the suspension tower section 20. The housing main body 10, the suspension tower section 20, and the brace section 30 are integrally formed by, for example, an aluminum die casting method.

Note that the members other than the suspension housing 2b are mainly formed by press-forming a steel plate. In order to join these members and the suspension housing 2b made of an aluminum alloy, which are dissimilar metals, an appropriate joining unit such as a SPR (self-piercing rivet) is adopted.

The housing main body 10 has: a housing side wall section 10a which faces inside in the vehicle width direction and extends in the vertical direction; a housing curved section 10b which is curved outward in the vehicle width direction from an upper edge section of the housing side wall section 10a; a housing upper wall section 10c which extends outward in the vehicle width direction from an outer end in the vehicle width direction of the housing curved section 10b; a side flange section 10d (first vehicle body constituent member) which extends upward from the outer end of the housing upper wall section 10c in the vehicle width direction; and a lower flange section 10e which extends inward in the vehicle width direction from a lower end section of the housing side wall section 10a.

The housing upper wall section 10c is inclined upward and extends outward in the vehicle width direction. The side flange section 10d is joined to the side panel 4 from inside in the vehicle width direction. The lower flange section 10e is joined to the rear floor panel 8 and the floor cross member 70 from above.

In addition, the housing main body 10 has: a front-side housing vertical wall section 14 which is raised on the inside of a cabin (inside in the vehicle width direction) at a front end section of the housing main body 10 and extends along the housing main body 10 in the vertical direction; and a rear-side housing vertical wall section 15 which is raised on the inside of the cabin at a rear end section of the housing main body 10 and extends along the housing main body 10 in the vertical direction. The housing main body 10 further has: a fastening-section circumferential wall section 11, a flange connecting wall section 12 (first connecting wall section), a brace connecting wall section 13 (a second connecting wall section), a rear upper connecting wall section 16, and a rear lower connecting wall section 17, which are raised as ribs or vertical wall sections in association with a suspension fastening section 24 to be described later.

The suspension tower section 20 is formed so as to bulge upward from a portion of the housing main body 10 including the housing curved section 10b. The suspension tower section 20 includes a tower upper wall section 21 to which an upper end of the suspension 6 is mounted; a tower bend section 22 which is bent downward from an outer peripheral edge section of the tower upper wall section 21, and a tower outer peripheral wall section 23 which extends downward from the tower bend section 22. In addition, the suspension tower section 20 has a first tower vertical wall section 27 and a second tower vertical wall section 28 extending downward from the tower bend section 22 to the tower outer peripheral wall section 23.

On the tower upper wall section 21, an upward projecting section 26 which projects upward and extends in the vehicle width direction is formed in a substantially central portion in the front-rear direction. That is, the tower upper wall section 21 is divided by the upward projecting section 26 into the front part and the rear part, that is, a front-side tower upper wall section 21F positioned on the front side and a rear-side tower upper wall section 21R positioned on the rear side.

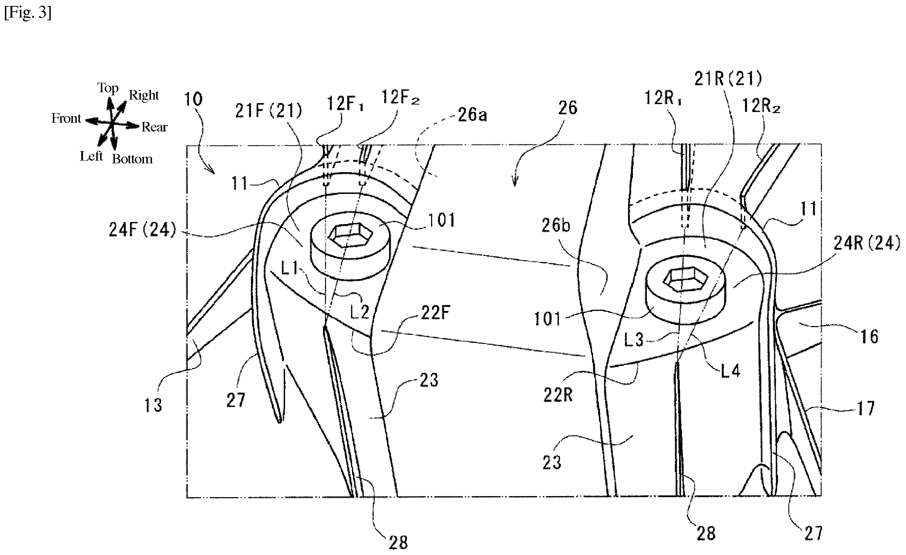

An outer portion in the vehicle width direction of the upward projecting section 26 extends in the vehicle width direction to the housing upper wall section 10c. An inner portion (lower portion) in the vehicle width direction of the upward projecting section 26 extends downward to the tower outer peripheral wall section 23. The upward projecting section 26 has: a projecting-section front wall section 26a which extends in the vertical direction on the rear side of the front-side tower upper wall section 21F; a projecting-section rear wall section 26b (see Fig. 3) which extends in the vertical direction on the front side of the rear-side tower upper wall section 21R; a projecting-section upper wall section 26c which connects the projecting-portion front wall section 26a and the projecting-portion rear wall section 26b at an upper edge section of the upward projecting section 26; and a projecting-section side wall section 26d which connects the projecting-section front wall section 26a and the projecting-section rear wall section 26b at an inside edge section in the vehicle width direction of the upward projecting section 26.

Fig. 3 is an enlarged view illustrating the periphery of the tower upper wall section 21. As illustrated in Fig. 3, each of the front-side tower upper wall section 21F and the rear-side tower upper wall section 21R is formed in a fan-like shape having a circular arc-shaped outer peripheral edge section which protrudes inward in the vehicle width direction in a plan view. In the front-side tower upper wall section 21F and the rear-side tower upper wall section 21R, a front-side suspension fastening section 24F and a rear-side suspension fastening section 24R to which the upper end of the suspension 6 is fastened and affixed, are formed, respectively. Note that in the present description, the suspension fastening section 24 means a fastening seat surface section with which a fastening bolt 101 to be fastened and affixed to the suspension fastening section 24 is brought into contact.

The tower bend section 22 is configured of: a front-side tower bend section 22F, which is a portion of the outer peripheral edge section of the front-side tower upper wall section 21F, the portion bending downward; and a rear-side tower bend section 22R, which is a portion of the outer peripheral edge section of the rear-side tower upper wall section 21R, the portion bending downward. Each of the front-side tower bend section 22F and the rear-side tower bend section 22R has a circular arc shape protruding inward in the vehicle width direction in a plan view. The outer peripheral edge section has a circular arc shape in a plan view. In addition, each of the front-side tower bend section 22F and the rear-side tower bend section 22R is a portion of the outer peripheral edge section, the portion bending downward, and is three-dimensionally bent. Therefore, the front-side tower bend section 22F and the rear-side tower bend section 22R have high rigidity.

One end (that is, a front end section) on a housing main body 10 side of the end sections in the peripheral direction of the front-side tower bend section 22F is connected to the first tower vertical wall section 27. The other end (that is, a rear end section) of the end sections in the peripheral direction of the front-side tower bend section 22F is connected to the projecting-section front wall section 26a (see Fig. 2). Similarly, one end (that is, a rear end section) on a housing main body 10 side of the end sections in the peripheral direction of the rear-side tower bend section 22R is connected to the first tower vertical wall section 27. The other end (that is, a front end section) of the end sections in the peripheral direction of the rear-side tower bend section 22R is connected to the projecting-section rear wall section 26b.

In other words, the front-side tower bend section 22F extends in a circular arc shape in a plan view between the first tower vertical wall section 27 and the projecting-section front wall section 26a. Similarly, the rear-side tower bend section 22R extends in a circular arc shape in a plan view between the projecting-section rear wall section 26b and the first tower vertical wall section 27. That is, each of both end sections (the front end sections and the rear end sections) in the peripheral direction of the front-side tower bend section 22F and the rear-side tower bend section 22R is connected to the first tower vertical wall section 27 and the projecting-section front wall section 26a or the projecting-section rear wall section 26b, and does not terminate alone.

The first tower vertical wall section 27 is raised in a rib shape in the suspension tower section 20 so as to extend in the vertical direction from the end in the peripheral direction of the tower bend section 22, positioned on the housing main body 10 side, to the tower outer peripheral wall section 23. Specifically, the first tower vertical wall sections 27 extend downward from the front end section of the front-side tower bend section 22F and the rear end section of the rear-side tower bend section 22R, respectively. In the present embodiment, the first tower vertical wall section 27 extends downward over the tower outer peripheral wall section 23, and the lower end thereof extends to the housing curved section 10b.

The second tower vertical wall section 28 is raised in a rib shape in the suspension tower section 20 so as to extend downward from the tower bend section 22 to the tower outer peripheral wall section 23 at a location in the front-rear direction substantially identical to that of the suspension fastening section 24. Specifically, the second tower vertical wall sections 28 extend downward from a middle section of the front-side tower bend section 22F in the front-rear direction and a middle section of the rear-side tower bend section 22R in the front-rear direction, respectively. As illustrated in Fig. 2, in the present embodiment, the second tower vertical wall section 28 extends downward over the tower outer peripheral wall section 23, and the lower end section thereof extends to the housing side wall section 10a.

As illustrated in Fig. 2, the brace section 30 is formed so as to bulge from the housing main body 10 to the inside of the cabin, and includes: a brace first portion 30a extending in the vertical direction; a brace curved section 30b curved inward in the vehicle width direction from a lower end of the brace first portion 30a; and a brace second portion 30c extending inward in the vehicle width direction from an inner end in the vehicle width direction of the brace curved section 30b. The brace section 30 extends in an L-shape in a front view.

The brace section 30 has a brace front wall section 31 which faces the front, a brace rear wall section 32 which faces the rear, and a brace side wall section 33 which connects, in the front-rear direction, inside-cabin edge sections of the brace front wall section 31 and the brace rear wall section 32. The brace section 30 has a substantially U-shaped cross section with the side opposite to the vehicle cabin opened.

In addition, the brace section 30 has a pair of front and rear ribs 30d, 30e which extend inward in the vehicle width direction from inner ends in the vehicle width direction of the brace front wall section 31 and the brace rear wall section 32, respectively, and diagonally connect the brace second portion 30c and the lower flange section 10e. Bending rigidity of the brace section 30 inward in the vehicle width direction is increased by the ribs 30d, 30e.

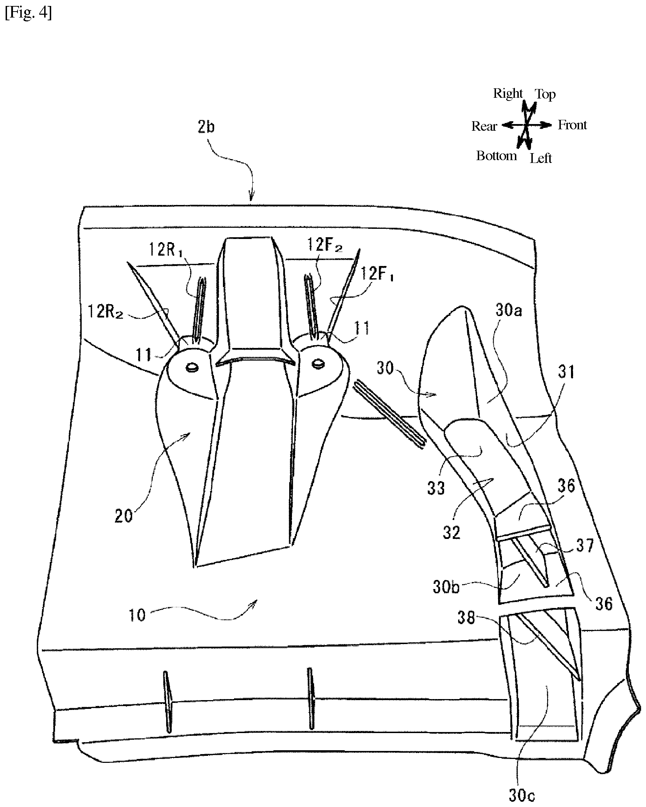

Fig. 4 is a perspective view of the suspension housing 2b as viewed from an inner surface side (lower side and the outside in the vehicle width direction). As illustrated in Fig. 4, two first ribs 36, 36 are formed in the brace curved section 30b. The first ribs 36 connect the brace front wall section 31, the brace rear wall section 32, and the brace side wall section 33 to one another, and are formed so as to divide the inside of the U-shaped cross section into a brace first portion 30a side and a brace second portion 30c side in the extending direction of the brace section 30.

In addition, a second rib 37 and a third rib 38 extending in the extending direction of the brace section 30 are formed in the brace curved section 30b. The second rib 37 is raised from the brace side wall section 33 toward the side opposite to the cabin, and connects the two adjacent first ribs 36, 36 to each other. The third rib 38 is raised from the brace side wall section 33 toward the side opposite to the cabin, and connects the first rib 36 and the brace front wall section 31 to each other.

Hereinafter, the fastening-section circumferential wall section 11, the flange connecting wall section 12, the brace connecting wall section 13, the rear upper connecting wall section 16, and the rear lower connecting wall section 17 formed in the housing main body 10 will be described.

As illustrated in Figs. 2, 3, in the housing main body 10, the fastening-section circumferential wall sections 11 and the flange connecting wall sections 12 are raised. The fastening-section circumferential wall sections 11 surround the peripheries of the front-side suspension fastening section 24F and the rear-side suspension fastening section 24R in the tower upper wall section 21 from the outside in the vehicle width direction, respectively. The flange connecting wall sections 12 radially extend outward and upward in the vehicle width direction from the fastening-section circumferential wall sections 11 along the housing upper wall section 10c and are connected to the side flange section 10d positioned above and outside in the vehicle width direction of the suspension fastening section 24. The flange connecting wall sections 12 include: front-side flange connecting wall sections 12F provided correspondingly to the front-side suspension fastening section 24F; and rear-side flange connecting wall sections 12R provided correspondingly to the rear-side suspension fastening section 24R.

The pair of front and rear front-side flange connecting wall sections 12F are provided and include: a first front-side flange connecting wall section 12F1 inclined forward and extending outward in the vehicle width direction; and a second flange front-side connecting wall section 12F2 inclined rearward and extending radially outward in the vehicle width direction. Similarly, the pair of front and rear rear-side flange connecting wall sections 12R are provided and include: a first rear-side flange connecting wall section 12R1 inclined forward and extending outward in the vehicle width direction; and a second rear-side connecting wall section 12R2 inclined rearward and extending radially outward in the vehicle width direction.

As illustrated in Fig. 3, the fastening-section circumferential wall section 11 is formed in a circular arc shape around the suspension fastening section 24, with the inside in the vehicle width direction in a plan view opened. The fastening-section circumferential wall section 11 is configured such that one end thereof positioned on the side opposite to the upward projecting section 26 is continuous with the upper end of the first tower vertical wall section 27. The other end of the fastening-section circumferential wall section 11 is connected to the upward projecting section 26, that is, the projecting-section front wall section 26a (or the projecting-section rear wall section 26b).

That is, since the circumference of the suspension fastening section 24 is surrounded by the front-side tower bend section 22F, the fastening-section circumferential wall section 11, and the upward projecting section 26 which have high rigidity, the suspension fastening section 24 has high rigidity.

With respect to the front-side tower upper wall section 21F, the front-side suspension fastening section 24F is positioned on imaginary lines L1, L2 connecting inner ends in the vehicle width direction of the first front-side flange connecting wall section 12F1 and the second front-side flange connecting wall section 12F2 to an upper end of the second tower vertical wall section 28. Similarly, with respect to the rear-side tower upper wall section 21R, the rear-side suspension fastening section 24R is positioned on imaginary lines L3, L4 connecting inner ends in the vehicle width direction of the first rear-side flange connecting wall section 12R1 and the second rear-side flange connecting wall section 12R2 to an upper end of the second tower vertical wall section 28.

Here, as illustrated in Fig. 2, the end inside in the vehicle width direction of the housing upper wall section 10c is connected to the upper end of the fastening-section circumferential wall section 11, so that a recess which is recessed downward and may generate a puddle is not formed at the portions where the front-side flange connecting wall section 12F and the rear-side flange connecting wall section 12R are formed.

Further, with respect to the front-side flange connecting wall section 12F, the portion positioned on the rear side with respect to the first front-side flange connecting wall section 12F1 and exposed from the housing upper wall section 10c to a front-surface side gradually reduces as it proceeds to the inside in the vehicle width direction. In contrast, the portion exposed from the housing upper wall section 10c to an inner-surface side gradually increases as it proceeds to the inside in the vehicle width direction. Therefore, it is possible to prevent generation of a puddle in the region where the front-side flange connecting wall section 12F is formed, while securing the length in the vertical direction of the front-side flange connecting wall section 12.

Similarly, with respect to the rear-side suspension fastening section 24R, the height in the vertical direction of the portion positioned on the front side with respect to the second rear-side flange connecting wall section 12R2 and exposed from the housing upper wall section 10c to the front-surface side gradually reduces as it proceeds to the inside in the vehicle width direction. In contrast, the height in the vertical direction of the portion exposed from the housing upper wall section 10c to the inner-surface side gradually increases as it proceeds to the inside in the vehicle width direction.

In addition, the brace connecting wall section 13 is formed which is raised in a rib-like shape and extends in the front-rear direction from the housing curved section 10b to the housing side wall section 10a, and connects the first tower vertical wall section 27 and the brace section 30 that is positioned forward of the first tower vertical wall section 27. The brace connecting wall section 13 is connected to the upper end of the first tower vertical wall section 27 and the brace curved section 30b.

Fig. 5 is a vertical cross-sectional view of the suspension housing 2b taken along line V-V in Fig. 2. As illustrated in Fig. 5, the tower upper wall section 21 including the suspension fastening section 24 is thicker than the rest. Preferably, the tower upper wall section 21 is configured to have a thickness approximately twice as large as that of the rest.

On an inner-surface side of the tower upper wall section 21, an upper mounting section 6a of the suspension 6 is mounted. Specifically, the fastening bolt 101 passes through the upper mounting section 6a from an upper-surface side of the suspension fastening section 24, and the lower part of the fastening bolt 101 is fastened by a fastening nut 102 on a lower-surface side of the upper mounting section 6a. Thus, the suspension 6 is fastened and affixed to the suspension fastening section 24.

As illustrated in Fig. 2, with respect to the rear-side suspension fastening section 24R positioned on the rear side, the rear upper connecting wall section 16 and the rear lower connecting wall section 17 are formed. The rear upper connecting wall section 16 and the rear lower connecting wall section 17 are raised in a rib-like shape and extend in the front-rear direction from the housing curved section 10b to the housing side wall section 10a, and connect the first tower vertical wall section 27 and the rear-side housing vertical wall section 15 that is positioned on the rear side with respect to the first tower vertical wall section 27, linearly.

The rear upper connecting wall section 16 and the rear lower connecting wall section 17 are connected to the upper end of the first tower vertical wall section 27. The rear upper connecting wall section 16 extends so as to be inclined upward as it proceeds rearward. The rear lower connecting wall section 17 extends so as to be inclined downward as it proceeds rearward.

The above-described structure 100 for the rear part of the body of the vehicle according to the present embodiment has the following effects.

In a case where the tower upper wall section 21 is formed in a fan-like shape in a plan view, and thus the tower bend section 22 has a circular arc shape in a plan view, a load in the vertical direction input from the suspension 6 to the suspension fastening section 24 is transmitted from the tower bend section 22 to the tower outer peripheral wall section 23 through the first tower vertical wall section 27. In this case, since the first tower vertical wall section 27 extends from the end in the peripheral direction of the tower bend section 22, a load transmission path does not terminate at the end in the peripheral direction of the tower bend section 22, and concentration of stress at the end in the peripheral direction is suppressed.

Therefore, in the case where the tower upper wall section 21 is formed in a fan-like shape in a plan view, since a load in the vertical direction input to the suspension fastening section 24 can be efficiently transmitted to the tower outer peripheral wall section 23, rigidity of the suspension tower section 20 in the vertical direction can be improved.

The load in the vertical direction input to the suspension fastening section 24 is transmitted through the flange connecting wall section 12 to the side flange section 10d and the side panel 4 serving as the vehicle body constituent members positioned above the suspension fastening section 24. Therefore, the load in the vertical direction input to the suspension fastening section 24 is dispersed in the vertical direction through the first tower vertical wall section 27 and the flange connecting wall section 12. Furthermore, since rigidity of the suspension fastening section 24 is increased by the fastening-section circumferential wall section 11, the load can be more efficiently dispersed in the vertical direction.

Since deformation of the first tower vertical wall section 27 in the front-rear direction is suppressed by the brace connecting wall section 13, rigidity of the first tower vertical wall section 27 is improved. Therefore, it is possible to make the first tower vertical wall section 27 effectively act so as to resist in the vertical direction while suppressing deformation of the first tower vertical wall section 27 in the front-rear direction, against a load transmitted from the suspension fastening section 24.

A load in the vertical direction input to the suspension fastening section 24 is transmitted to the tower outer peripheral wall section 23 through the second tower vertical wall section 28 in addition to the first tower vertical wall section 27. Furthermore, since the flange connecting wall section 12 and the second tower vertical wall section 28 are positioned to face each other with the suspension fastening section 24 interposed therebetween, the flange connecting wall section 12 and the second tower vertical wall section 28 act so as to pull against each other, which makes it easy to resist a load in the vertical direction input to the suspension fastening section 24.

Since the tower upper wall section 21 is thicker than the rest, the rigidity of the suspension fastening section 24 can be improved. Therefore, the load in the vertical direction input to the suspension fastening section 24 can be efficiently transmitted to the rest while deformation in the suspension fastening section 24 is suppressed.

In the above embodiment, the suspension housing 2b is formed by the aluminum die casting method. In addition to this, the suspension housing 2b may also be formed of a cast product or a forged product using a light alloy other than iron and aluminum as raw material, may be formed by press-forming a steel plate, or may be formed by joining a plurality of members, for example, by welding. In addition, the suspension housing 2b may be made of CFRP (carbon fiber reinforced plastic).

In addition, in the above-described embodiment, a configuration may be adopted in which the front and rear two suspension fastening sections 24 are provided. However, the present invention is not limited to this, and three suspension fastening sections 24 may be provided, or four or more suspension fastening sections 24 may be provided. In any case, the tower upper wall section 21 does not have an annular shape but is formed in a fan-like shape in a plan view. Therefore, the present invention can be suitably applied in a case where the outer peripheral edge section (the tower bend section 22) has a circular arc shape.

Various modifications and changes can be made without departing from the scope of the present invention as described in the claims.

### Industrial Applicability

As described above, according to the structure for the rear part of the body of the vehicle of the present invention, in a case where the tower bend section of the suspension tower section has a circular arc shape in a plan view, concentration of stress at an end in the peripheral direction of the tower bend section can be suppressed and a load can be efficiently transmitted to the tower outer peripheral wall section. Therefore, there is a possibility that the structure for the rear part of the body of the vehicle will be suitably used in a field of the manufacturing technology of this type.

### Reference Signs List

- 2: wheel house inner
- 2b: suspension housing
- 4: side panel
- 6: suspension
- 10: housing main body
- 11: fastening-section circumferential wall section
- 12: flange connecting wall section
- 13: brace connecting wall section
- 14: front-side housing vertical wall section
- 15: rear-side housing vertical wall section
- 20: suspension tower section
- 21: tower upper wall section
- 22: tower bend section
- 23: tower outer peripheral wall section
- 24: suspension fastening section
- 26: upward projecting section
- 27: first tower vertical wall section
- 28: second tower vertical wall section
- 30: brace section

## Claims

1. A structure for a rear part of a body of a vehicle comprising a suspension tower section (20) to which a suspension (6) is mounted at at least two positions including a vehicle front position and a vehicle rear position, the suspension tower section (20) including:
a tower upper wall section (21) which has a circular arc-shaped outer peripheral edge section located inside in a vehicle width direction, and which has a suspension fastening section (24) to which an upper end of the suspension (6) is fastened and affixed;
a tower bend section (22) which is a portion of the outer peripheral edge section, the portion being bent downward; and
a tower outer peripheral wall section (23) which extends downward from the tower bend section (22); **characterized in that**
said suspension tower section (20) further includes
a first tower vertical wall section (27) which is raised along the suspension tower section (20) and extends downward from an end in a peripheral direction of the tower bend section (22) to the tower outer peripheral wall section (23), wherein:
on the tower upper wall section (21), an upward projecting section (26) which projects upward and extends in the vehicle width direction is formed in a substantially central portion in a front-rear direction;
the tower upper wall section (21) is divided by the upward projecting section (26) into a front-side tower upper wall section (21F) and a rear-side tower upper wall section (21R);
the upward projecting section (26) includes a projecting-section front wall section (26a) and a projecting-section rear wall section (26b), the projecting-section front wall section (26a) extending in a vertical direction on a rear side of the front-side tower upper wall section (21F), the projecting-section rear wall section (26b) extending in the vertical direction on a front side of the rear-side tower upper wall section (21R);
the tower bend section (22) includes a front-side tower bend section (22F) and a rear-side tower bend section (22R), the front-side tower bend section (22F) being a downward bent portion of an outer peripheral edge section of the front-side tower upper wall section (21F), the rear-side tower bend section (22R) being a downward bent portion of an outer peripheral edge section of the rear-side tower upper wall section (21R);
the first tower vertical wall section (21) extends downward from a front-rear direction front end of the front-side tower bend section (22F) and a front-rear direction rear end of the rear-side tower bend section (22R) to the tower outer peripheral wall section (23); and
a front-rear direction rear end of the front-side tower bend section (22F) is connected to the projecting-section front wall section (26a), and a front-rear direction front end of the rear-side tower bend section (22R) is connected to the projecting-section rear wall section (26b).

2. The structure for the rear part of the body of the vehicle according to claim 1, wherein the suspension tower section (20) is provided in a suspension housing (26), the suspension housing (26) including:
a fastening-section circumferential wall section (11) which is raised so as to surround a circumference of the suspension fastening section (24) from outside in the vehicle width direction and an inner end of which in the vehicle width direction is connected to the first tower vertical wall section (27); and
a first connecting wall section (12) which is raised on the suspension housing (26) and connects the fastening-section circumferential wall section (11) and a first vehicle body constituent member positioned above the fastening-section circumferential wall section (11).

3. The structure for the rear part of the body of the vehicle according to claim 2, wherein
the suspension tower section (20) further includes a second tower vertical wall section (28) which extends downward from the tower bend section (22) to the tower outer peripheral wall section, at a location in a front-rear direction substantially identical to a location of the suspension fastening section (24), and
the suspension fastening section (24) is positioned, in a plan view, on an imaginary line (L1, L2, L3, L4) passing through an inner end in the vehicle width direction of the first connecting wall section (12) and an upper end of the second tower vertical wall section (28).

4. The structure for the rear part of the body of the vehicle according to any one of claims 1 to 3, wherein
the suspension tower section (20) is provided in the suspension housing (26), and
the suspension housing (26) further includes a second connecting wall section (13) which is raised on the suspension housing (26) and connects the first tower vertical wall section (27) and a second vehicle body constituent member positioned either forward or rearward of the first tower vertical wall section (27).

5. The structure for the rear part of the body of the vehicle according to any one of claims 1 to 4, wherein the suspension tower section (20) is configured such that the suspension fastening section (24) is thicker than rest of the suspension tower section (20).

6. The structure for the rear part of the body of the vehicle according to claim 1, wherein:
the suspension tower section (20) is provided in a suspension housing (26);
the suspension housing (26) includes a housing main body (10);
the housing main body (10) includes
a housing side wall section (10a) extending in the vertical direction,
a housing curved section (10b) curved outward in the vehicle width direction from an upper edge section of the housing side wall section (10a), and
a housing upper wall section (10c) extending outward in the vehicle width direction from an outer end in the vehicle width direction of the housing curved section (10b); and
the first tower vertical wall section (27) extends downward over the tower outer peripheral wall section (23), and a lower end of the first tower vertical wall section (27) extends to the housing curved section (10b).

## Patentansprüche

1. Struktur für einen Heckteil einer Karosserie eines Fahrzeugs, der einen Federungsmastabschnitt (20) aufweist, an dem eine Federung (6) an wenigstens zwei Positionen, einschließlich einer Fahrzeugfrontposition und einer Fahrzeugheckposition, angebracht ist, wobei der Federungsmastabschnitt (20) aufweist:
einen oberen Wandabschnitt (21) des Masts, der einen kreisförmigen, bogenförmigen Umfangskantenabschnitt, der sich in einer Fahrzeugbreitenrichtung befindet, aufweist und der einen Federungsbefestigungsabschnitt (24) aufweist, an dem ein oberes Ende der Federung (6) befestigt und fixiert ist;
einen Biegeabschnitt (22) des Masts, der ein Teil des Außenumfangskantenabschnitts ist, wobei der Teil nach unten gebogen ist; und
einen Außenumfangswandabschnitt (23) des Masts, der sich von dem Biegeabschnitt (22) des Masts nach unten erstreckt; **dadurch gekennzeichnet, dass**
der Federungsmastabschnitt (20) ferner aufweist:
einen ersten vertikalen Wandabschnitt (27) des Masts, der entlang des Federungsmastabschnitts (20) erhöht ist und sich von einem Ende in einer Umfangsrichtung des Biegeabschnitts (22) des Masts zum Außenumfangswandabschnitt (23) des Masts nach unten erstreckt, wobei:
auf dem oberen Wandabschnitt (21) des Masts ein nach oben vorstehender Abschnitt (26), der nach oben vorsteht und sich in der Fahrzeugbreitenrichtung erstreckt, in einem im Wesentlichen mittigen Teil in einer Front-Heck-Richtung ausgebildet ist;
der obere Wandabschnitt (21) des Masts durch den nach oben vorstehenden Abschnitt (26) in einen oberen Wandabschnitt (21F) des vorderseitigen Masts und einen oberen Wandabschnitt (21R) des rückseitigen Masts unterteilt ist;
der nach oben vorstehende Abschnitt (26) einen Vorderseitenwandabschnitt (26a) des vorstehenden Abschnitts und einen Rückwandabschnitt (26b) des vorstehenden Abschnitts aufweist, wobei sich der Vorderseitenwandabschnitt (26a) des vorstehenden Abschnitts in einer vertikalen Richtung auf einer Rückseite des oberen Wandabschnitts (21F) des vorderseitigen Masts erstreckt, wobei sich der Rückwandabschnitt (26b) des vorstehenden Abschnitts in die vertikale Richtung auf einer Vorderseite des oberen Wandabschnitts (21R) des rückseitigen Masts erstreckt;
der Biegeabschnitt (22) des Masts einen Biegeabschnitt (22F) des vorderseitigen Masts und einen Biegeabschnitt (22R) des rückseitigen Masts aufweist, wobei der Biegeabschnitt (22F) des vorderseitigen Masts ein nach unten gebogener Teil eines Außenumfangskantenabschnitts des oberen Wandabschnitts (21F) des vorderseitigen Masts ist, wobei der Biegeabschnitt (22R) des rückseitigen Masts ein nach unten gebogener Teil eines Außenumfangskantenabschnitts des oberen Wandabschnitts (21R) des rückseitigen Masts ist;
sich der erste vertikale Wandabschnitt (21) des Masts von einem vorderen Ende der Front-Heck-Richtung des Biegeabschnitts (22F) des vorderseitigen Masts und einem hinteren Ende der Front-Heck-Richtung des Biegeabschnitts (22R) des rückseitigen Masts nach unten zum Außenumfangswandabschnitt (23) des Masts erstreckt;
ein hinteres Ende der Front-Heck-Richtung des Biegeabschnitts (22F) des vorderseitigen Masts mit dem Vorderseitenwandabschnitt (26a) des vorstehenden Abschnitts verbunden ist und ein vorderes Ende der Front-Heck-Richtung des Biegeabschnitts (22R) des rückseitigen Masts mit dem Rückwandabschnitt (26b) des vorstehenden Abschnitts verbunden ist.

2. Struktur für den Heckteil der Karosserie des Fahrzeugs nach Anspruch 1, wobei der Federungsmastabschnitt (20) in einem Federungsgehäuse (26) bereitgestellt ist, wobei das Federungsgehäuse (26) aufweist:
einen umlaufenden Wandabschnitt (11) des Befestigungsabschnitts, der erhöht ist, um eine Umfangslänge des Federungsbefestigungsabschnitts (24) von der Außenseite in der Fahrzeugbreitenrichtung zu umgeben, und dessen inneres Ende in der Fahrzeugbreitenrichtung mit dem ersten vertikalen Wandabschnitt (27) des Masts verbunden ist; und
einen ersten Verbindungswandabschnitt (12), der auf dem Federungsgehäuse (26) erhöht ist und den umlaufenden Wandabschnitt (11) des Befestigungsabschnitts und ein erstes Fahrzeugkarosseriebestandteilelement, das über dem umlaufenden Wandabschnitt (11) des Befestigungsabschnitts positioniert ist, miteinander verbindet.

3. Struktur für den Heckteil der Karosserie des Fahrzeugs nach Anspruch 2, wobei
der Federungsmastabschnitt (20) ferner einen zweiten vertikalen Wandabschnitt (28) des Masts aufweist, der sich an einem Standort in einer Front-Heck-Richtung, der im Wesentlichen mit einem Standort des Federungsbefestigungsabschnitts (24) identisch ist, von dem Biegeabschnitt (22) des Masts zum Außenumfangswandabschnitt des Masts nach unten erstreckt, und
der Federungsbefestigungsabschnitt (24) in einer Draufsicht auf einer gedachten Linie (L1, L2, L3, L4), die ein inneres Ende in der Fahrzeugbreitenrichtung des ersten Verbindungswandabschnitts (12) und ein oberes Ende des zweiten vertikalen Wandabschnitts (28) des Masts durchläuft, positioniert ist.

4. Struktur für den Heckteil der Karosserie des Fahrzeugs nach einem der Ansprüche 1 bis 3, wobei
der Federungsmastabschnitt (20) im Federungsgehäuse (26) bereitgestellt ist und
das Federungsgehäuse (26) ferner einen zweiten Verbindungswandabschnitt (13) aufweist, der auf dem Federungsgehäuse (26) erhöht ist und den ersten vertikalen Wandabschnitt (27) des Masts und ein zweites Fahrzeugkarosseriebestandteilelement, das entweder vor oder hinter dem ersten vertikalen Wandabschnitt (27) des Masts positioniert ist, miteinander verbindet.

5. Struktur für den Heckteil der Karosserie des Fahrzeugs nach einem der Ansprüche 1 bis 4, wobei der Federungsmastabschnitt (20) derart konfiguriert ist, dass der Federungsbefestigungsabschnitt (24) dicker als der Rest des Federungsmastabschnitts (20) ist.

6. Struktur für den Heckteil der Karosserie des Fahrzeugs nach Anspruch 1, wobei:
der Federungsmastabschnitt (20) in einem Federungsgehäuse (26) bereitgestellt ist;
das Federungsgehäuse (26) einen Gehäusehauptkörper (10) aufweist;
der Gehäusehauptkörper (10) Folgendes aufweist:
einen Gehäuseseitenwandabschnitt (10a), der sich in der vertikalen Richtung erstreckt,
einen gekrümmten Gehäuseabschnitt (10b), der in der Fahrzeugbreitenrichtung von einem oberen Kantenabschnitt des Gehäuseseitenwandabschnitts (10a) nach außen gekrümmt ist, und
einen oberen Gehäusewandabschnitt (10c), der sich in der Fahrzeugbreitenrichtung von einem Außenende in der Fahrzeugbreitenrichtung des gekrümmten Gehäuseabschnitts (10b) nach außen erstreckt; und
sich der erste vertikale Wandabschnitt (27) des Masts über den Außenumfangswandabschnitt (23) des Masts nach unten erstreckt und sich ein unteres Ende des ersten vertikalen Wandabschnitts (27) des Masts zum gekrümmten Gehäuseabschnitt (10b) erstreckt.

## Revendications

1. Structure pour une partie arrière d'une carrosserie d'un véhicule, la structure comprenant une partie tour (20) de suspension à laquelle une suspension (6) est montée au niveau d'au moins deux positions comprenant une position avant du véhicule et une position arrière du véhicule, la partie tour (20) de suspension comprenant :
une partie paroi supérieure (21) de tour présentant une partie bord périphérique externe en forme d'arc de cercle située à l'intérieur dans une direction de la largeur du véhicule, et comportant une partie (24) de fixation de suspension à laquelle une extrémité supérieure de la suspension (6) est reliée et fixée ;
une partie courbure (22) de tour constituant une portion de la partie bord périphérique externe, la portion étant courbé vers le bas ; et
une partie paroi périphérique externe (23) de tour s'étendant vers le bas à partir de la partie courbure (22) de tour ; **caractérisée en ce que**
ladite partie tour (20) de suspension comprend en outre
une première partie paroi verticale (27) de tour surélevé le long de la partie tour (20) de suspension et s'étendant vers le bas à partir d'une extrémité, dans une direction périphérique de la partie courbure (22) de tour, vers la partie paroi périphérique externe (23) de tour, dans laquelle :
sur la partie paroi supérieure (21) de tour, une partie saillante vers le haut (26), faisant saillie vers le haut et s'étendant dans la direction de la largeur du véhicule, est formée dans une portion sensiblement centrale dans une direction avant-arrière ;
la partie paroi supérieure (21) de tour est divisée par la partie saillante vers le haut (26) en une partie paroi supérieure côté avant (21F) de tour et une partie paroi supérieure côté arrière (21R) de tour ;
la partie saillante vers le haut (26) comprend une partie paroi avant (26a) de partie saillante et une partie paroi arrière (26b) de partie saillante, la partie paroi avant (26a) de la partie saillante s'étendant dans une direction vertical sur un côté arrière de la partie paroi supérieure côté avant (21F) de tour, la partie paroi arrière (26b) de la partie saillante s'étendant dans la direction vertical sur un côté avant de la partie paroi supérieure côté arrière (21R) de tour ;
la partie courbure (22) de tour comprend une partie courbure côté avant (22F) de tour et une partie courbure côté arrière (22R) de tour, la partie courbure côté avant (22F) de tour étant une portion courbée vers le bas d'une partie bord périphérique externe de la partie paroi supérieure côté avant (21F) de tour, la partie courbure côté arrière (22R) de tour étant une portion courbée vers le bas d'une partie bord périphérique externe de la partie paroi supérieure côté arrière (21R) de tour ;
la première partie paroi verticale (21) de tour s'étend vers le bas à partir d'une extrémité avant, dans la direction avant-arrière, de la partie courbure côté avant (22F) de tour, et d'une extrémité arrière, dans la direction avant-arrière, de la partie courbure côté arrière (22R) de tour, vers la partie paroi périphérique externe (23) de tour ; et
une extrémité arrière, dans la direction avant-arrière, de la partie courbure côté avant (22F) de tour est reliée à la partie paroi avant (26a) de la partie saillante, et une extrémité avant, dans la direction avant-arrière, de la partie courbure côté arrière (22R) de tour est reliée à la partie paroi arrière (26b) de la partie saillante.

2. La structure pour la partie arrière de la carrosserie du véhicule selon la revendication 1, dans laquelle la partie tour (20) de suspension est agencée dans une enveloppe (26) de suspension, l'enveloppe (26) de suspension comprenant :
une partie paroi circonférentielle (11) de partie de fixation, surélevée de façon à entourer une circonférence de la partie (24) de fixation de suspension à partir de l'extérieur dans la direction de la largeur du véhicule, et dont une extrémité interne, dans la direction de la largeur du véhicule, est reliée à la première partie paroi verticale (27) de tour ; et
une première partie paroi de liaison (12), surélevée sur l'enveloppe (26) de suspension et reliant la partie paroi circonférentielle (11) de la partie de fixation et un premier élément constitutif de la carrosserie du véhicule positionné au dessus de la partie paroi circonférentielle (11) de la partie de fixation.

3. La structure pour la partie arrière de la carrosserie du véhicule selon la revendication 2, dans laquelle
la partie tour (20) de suspension comprend en outre une seconde partie paroi verticale (28) de tour s'étendant vers le bas à partir de la partie courbure (22) de tour vers la partie paroi périphérique externe de tour, au niveau d'un emplacement, dans une direction avant-arrière, sensiblement identique à un emplacement de la partie (24) de fixation de suspension, et
la partie (24) de fixation de suspension est positionnée, dans une vue en plan, sur une ligne imaginaire (L1, L2, L3, L4) passant à travers une extrémité interne, dans la direction de la largeur du véhicule, de la première partie paroi de liaison (12) et une extrémité supérieure de la seconde partie paroi verticale (28) de tour.

4. La structure pour la partie arrière de la carrosserie du véhicule selon l'une quelconque des revendications 1 à 3, dans laquelle
la partie tour (20) de suspension est agencée dans l'enveloppe (26) de suspension, et
l'enveloppe (26) de suspension comprend en outre une seconde partie paroi de liaison (13), surélevée sur l'enveloppe (26) de suspension et reliant la première partie paroi verticale (27) de tour et un second élément constitutif de la carrosserie du véhicule positionné soit vers l'avant, soit vers l'arrière de la première partie paroi verticale (27) de tour.

5. La structure pour la partie arrière de la carrosserie du véhicule selon l'une quelconque des revendications 1 à 4, dans laquelle la partie tour (20) de suspension est conçue de sorte que la partie (24) de fixation de suspension soit plus épaisse que le reste de la partie tour (20) de suspension.

6. La structure pour la partie arrière de la carrosserie du véhicule selon la revendication 1, dans laquelle :
la partie tour (20) de suspension est agencée dans une enveloppe (26) de suspension ;
l'enveloppe (26) de suspension comprend un corps principal (10) d'enveloppe ;
le corps principal (10) de l'enveloppe comprend
une partie paroi latérale (10a) d'enveloppe s'étendant dans la direction verticale,
une partie incurvée (10b) d'enveloppe incurvée vers l'extérieur, dans la direction de la largeur du véhicule, à partir d'une partie bord supérieur de la partie paroi latérale (10a) de l'enveloppe, et
une partie paroi supérieure (10c) d'enveloppe s'étendant vers l'extérieur, dans la direction de la largeur du véhicule, à partir d'une extrémité externe, dans la direction de la largeur du véhicule, de la partie incurvée (10b) de l'enveloppe ; et
la première partie paroi verticale (27) de tour s'étend vers le bas au dessus de la partie paroi périphérique externe (23) de tour, et une extrémité inférieure de la première partie paroi verticale (27) de tour s'étend vers la partie incurvée (10b) de l'enveloppe.
